# EUROPEAN PATENT SPECIFICATION

(11) **EP 4 155 612 B1**
(45) Date of publication and mention of the grant of the patent: **21.01.2026**
(21) Application number: 22020455.6
(22) Date of filing: 22.09.2022
(51) Int. Cl.: F23R 7/00, F02K 9/46

(54) **PRE-COMBUSTION CHAMBER FOR FEEDING A TURBINE IN A LIQUID PROPELLANT ROCKET ENGINE**
VORBRENNKAMMER ZUR VERSORGUNG EINER TURBINE IN EINEM RAKETENMOTOR MIT FLÜSSIGTREIBSTOFF
CHAMBRE DE PRÉCOMBUSTION POUR L'ALIMENTATION D'UNE TURBINE DANS UN MOTEUR-FUSÉE À PROPERGOL LIQUIDE

(30) Priority: 22.09.2021 PL 43900921
(43) Date of publication of application: 29.03.2023
(73) Proprietor: SIEC BADAWCZA LUKASIEWICZ-INSTYTUT LOTNICTWA, 02-256 Warszawa (PL)
(72) Inventor: WOLANSKI, Piotr, 02-765 Warszawa (PL); KAWALEC, Michal, 02-679 Warszawa (PL)
(74) Representative: Malewska, Ewa

(56) References cited:
- CN-A- 106 285 945
- DE-A1- 4 234 248
- FR-A1- 2 232 685
- US-A1- 2019 128 529
- US-B2- 7 150 143
- US-B2- 9 021 783

## Description

The present invention relates to a pre-combustion chamber for feeding a turbine in a liquid propellant rocket engine.

Various types of rockets are known, equipped in solid, liquid or hybrid chemical propellant engines or with electric propulsion engines (ion and plasma engines). Each type of the same has its own advantages that can be useful in the various launching and flight stages of rockets or their individual stages, space shuttles and satellites. The criteria for selecting a propulsion depend on aims set for individual elements of space objects and technical conditions necessary for their implementation.

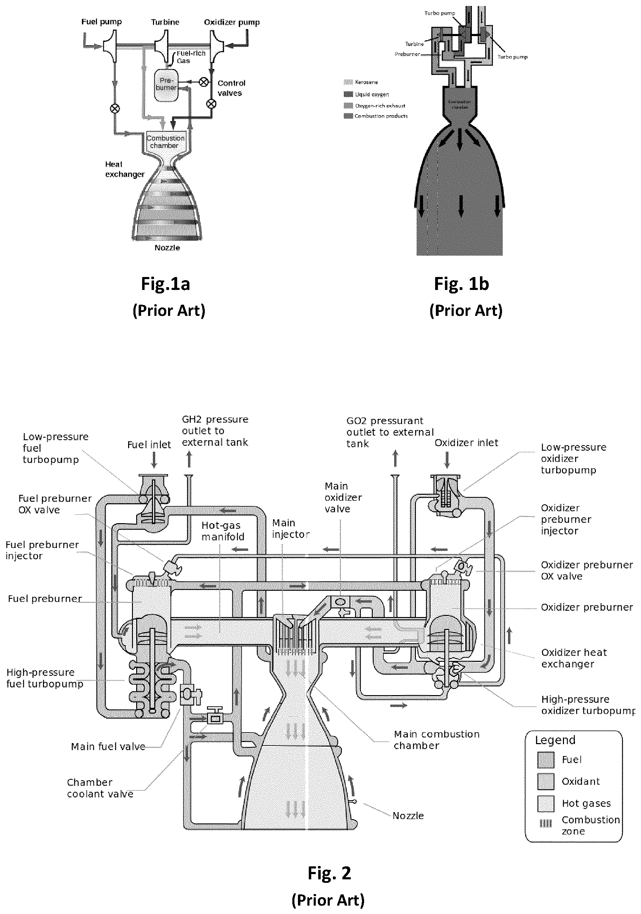

In liquid propellant rocket engines, the primary requirement is to ensure that the pumps supplying the propellants to the combustion chambers are sufficiently effective. In such engines, one of the methods of driving the pumps supplying the engine with liquid fuel and liquid oxidizer is the use of pre-combustion chambers, in which the incomplete combustion of both propellants is used to drive the turbines. Two solutions are used:
▪ a deflagration combustion of a fuel-rich mixture of propellants, carried out in a pre-combustion chamber, illustrated in the attached drawing Fig. 1a, or
▪ a deflagration combustion of an oxidant-rich mixture of propellants, carried out in the pre-combustion chamber, illustrated in the attached drawing Fig. 1b.

In both cases, the composition of the mixture is selected so that the products of incomplete deflagration combustion have a temperature lower than the temperature admissible for feeding the turbines. The composition of incomplete combustion products allows their use in the main combustion chamber (closed combustion cycle), which improves the degree of fuel utilization. These systems are described in many manuals as well as they are available on the Internet [1-5]. Exemplary construction diagrams of such motors are shown in the accompanying

A device for providing energy for driving fuel and oxidizer pumps of a liquid propellant rocket engine having a main combustion chamber, the device comprising a pre-combustion chamber, is known from FR 2 232 685.

In the above known systems, a direct connection between the turbines and the propellant pumps is used. In practice, two types of solutions are used. In the first one, the gases from the pre-combustion chamber feed the turbine, which turbine through mechanical connections (gears), simultaneously drives both the fuel and oxidant pumps (Fig. 1). More elaborated designs use separate pre-combustion chambers to drive the fuel pumps and the oxidant pumps (Fig. 2), allowing greater freedom in controlling the propellant composition in the main combustion chamber of the rocket engine.

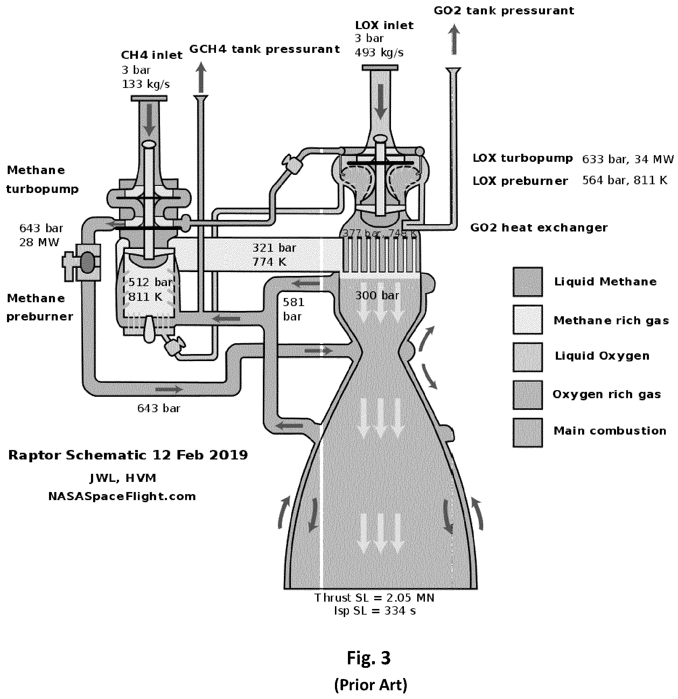

Fig. 3 shows the construction and operation of the SpaceX "Raptor" engine. This engine makes it possible to obtain unusually high pressures in the main combustion chamber. However, it requires cooling both the chamber and the outlet nozzle. In this solution, the fuel and oxidant pumps are supplied with the energy obtained in the pre-combustion chambers.

While the above solutions have significant advantages over previous liquid propellant engines, there are still areas where further improvements are possible.

For the engines of the first stages of the rocket, it is possible to supply the engines driving the pumps of liquid propellants until the rocket launches from the ground power supply systems, which significantly simplifies and shortens the rocket engine starting cycle. However, this is an impractical solution and used only in relatively small rockets, because the engine on the launcher works only a few seconds until launch, and after detaching from the launcher - for a further few minutes, and then it must be powered from relatively heavy on-board batteries placed on the rocket, within the body of the rocket, which of course increase the rocket weight and at the same time reduce its load capacity.

The aim of the present invention is to provide a new design of the propellant pre-combustion chamber, enabling simplification of the fuel and oxidant pumps supply system, which will reduce the weight of the system when compared to known classic solutions, and additionally allows greater flexibility of the engine operation, such as, for example, thrust control (the amount of a supplied fuel and oxidant) of a rocket engine at various stages of the rocket/shuttle flight, etc.

Unexpectedly, it turned out that by using a detonation combustion of a mixture of fuel and oxidant in a pre-combustion chamber, it is possible to use the obtained energy to drive a single turbine and one electric energy generator supplying (with energy) separate electric motors for driving fuel and oxidant pumps. This ensures high flexibility in the operation of the pumps due to elimination of their mechanical coupling with the turbine, and at the same time reduces the weight of the entire power supply system and provides greater flexibility in rocket engine thrust control. The present invention significantly improves a supply of power for the rocket engine and simplifies its structure, eliminating energy losses in the pre-combustion stage.

According to the invention, in a liquid propellant rocket engine, a pre-combustion chamber that provides energy for driving the fuel and oxidant pumps, is a detonation chamber in which - in a rotating detonation mode, the propellant mixture enriched with one of its components is continuously burned, the chamber being arranged coaxially with a turbine and a power generator that powers electric motors driving the fuel and oxidant pumps, and also with the outlet of incomplete combustion products from the turbine to the main combustion chamber of the rocket engine.

According to the invention, the pre-combustion chamber has a form of a disc connected on one side to the device body and protruding beyond its external circumference and on the other side forming a coaxial outlet for incomplete combustion products passing through a centripetal turbine mounted on a bearing shaft supporting also the power generator built into the body. In a cylindrical outer wall of the pre-combustion chamber according to the invention, inlets of the fuel and oxidant, preferably previously vaporized, are arranged circumferentially, and on its cylindrical inner wall there are guides splitting a centripetal stream of exhaust gases and directing them to the centripetal turbine blades.

Alternatively, the pre-combustion chamber has the form of a ring mounted on an inner side of the device cylindrical body and having a common external wall with the body, whereas a power generator is built into an interior of the body and mounted on a bearing shaft together with an axial turbine separating the body from the outlet of combustion products. In the annular pre-combustion chamber according to the invention, inlets of the fuel and oxidant, preferably previously vaporized, are arranged concentrically on the cylindrical ring base opposite to the outlet of a stream of exhaust gases, where there are guides splitting the axial stream of exhaust gases and directing the same to the axial turbine blades.

Electrical current supplied through cables from the power generator, powers the fuel and oxidant pumps and possibly other electrical devices/systems of the rocket.

First of all, the solution of the invention allows more flexible control of the pumps operation and of dosing components of the propellant powering the rocket engine by limiting the device structure to a single turbine and eliminating the rigid mechanical connection(s) between the turbine and the propellant pump(s) of the rocket engine. The simplified structure is lighter and more compact, which allows for better use of the space inside the rocket and for increase of the rocket load capacity. The generated electric current can optionally be used also for powering other devices/systems of the rocket and/or of the rocket stage. The incomplete combustion products leaving the turbine are burned in the main combustion chamber of the rocket engine.

The invention is described below in more detail with reference to the accompanying drawing, where Figs. 1 to 3 refer to prior art solutions and:
Fig. 1a is a schematic diagram of a known rocket engine with a single pre-burner for propulsion of a turbine that drives fuel and oxidant pumps, wherein deflagration combustion of fuel-rich propellant takes place in the pre-burner;
Fig. 1b is a schematic diagram of a known rocket engine with a single pre-burner for propulsion of a turbine that drives fuel and oxidant pumps, wherein the deflagration combustion of oxidant-rich propellant takes place in the pre-burner;
Fig. 2 shows a schematic diagram of the known RS-25 rocket engine with separate pre-burners for driving the fuel and oxidizer pumps, in which pre-burners deflagration combustion of fuel-rich combustible mixture takes place;
Fig. 3 shows a schematic diagram of the known "Raptor" rocket engine, in which two pre-burners are employed for deflagration combustion of enriched with fuel (in this case methane) combustible mixture in one of them and of a mixture enriched with oxidant (oxygen) in the other one;
while Fig. 4 and Fig. 5 illustrate the solution according to the invention, where:
Fig. 4 is a schematic diagram of a disc detonation pre-combustion chamber for driving a turbine of a liquid propellant rocket engine, in an axial section (Fig. 4a) and in a perspective and partial sectional view (Fig. 4b); and
Fig. 5 is a schematic diagram of an annular detonation pre-combustion chamber for driving a turbine of a liquid propellant rocket engine, in an axial section (Fig. 5a) and in a perspective and partial sectional view (Fig. 5b).

### Detailed description of the invention

The pre-combustion chamber of a liquid propellant rocket engine provides energy for driving the fuel and oxidizer pumps. However, in the chamber, a propellant mixture is burned, in which the fuel or oxidant predominates, so as the combustion would utilize only a part of a component in excess, and thus would not lead to the combustion products temperature exceeding the acceptable turbine operating conditions. At the same time, the products - after supplementing the propellant mixture to optimum composition parameters from the point of view of combustion in the main combustion chamber of the rocket engine, need not to be removed as they can be burned in the main combustion chamber.

Carrying the rotating detonation process in the pre-combustion chamber (pre-burner) of the rocket engine allows for a greater efficiency of the process, because in the detonation process, as opposed to a classic deflagration combustion, the pressure increases (the so-called Pressure Gain Combustion). In addition, due to the very high density of the released energy, the pre-burner is much smaller, more compact and in consequence also lighter. Therefore, the rotating detonation process taking place in the pre-burner of the engine allows for an improvement of the pre-burner efficiency and for an increase in performance of the rockets equipped with turbine propulsion systems of the kind.

In a pre-combustion chamber according to the invention, in the rotating detonation process, a fuel and oxidant propellant mixture, preferably previously vaporized, is burned while having:
▪ a fuel-rich composition or alternatively an oxidant-rich composition; whereas
▪ the structure and dimensions of the chamber - in a disc or a ring form, can be easily adapted to the spatial conditions within the rocket and/or rocket stage, as well as to the desired efficiency of fuel and oxidizer pumps, taking into account the needs of the rocket, space shuttle or satellite; and
▪ the combustion products from the detonation pre-combustion chamber, used to power the turbine driving the power generator, provide sufficient energy to drive the fuel pump and the oxidizer pump, and possibly to generate an electricity excess for optional powering other components, devices and systems of the rocket apart from powering the propellant components pumps, although in the present solution according to the invention thus generated electricity serves mainly to improve the fuel and oxidizer pumps driving that is expected to consume approximately 98-99% of all energy produced in a generator powered by a single gas turbine.

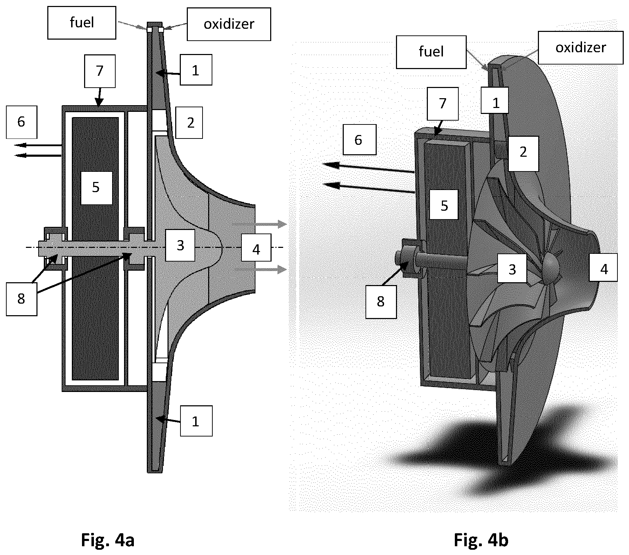

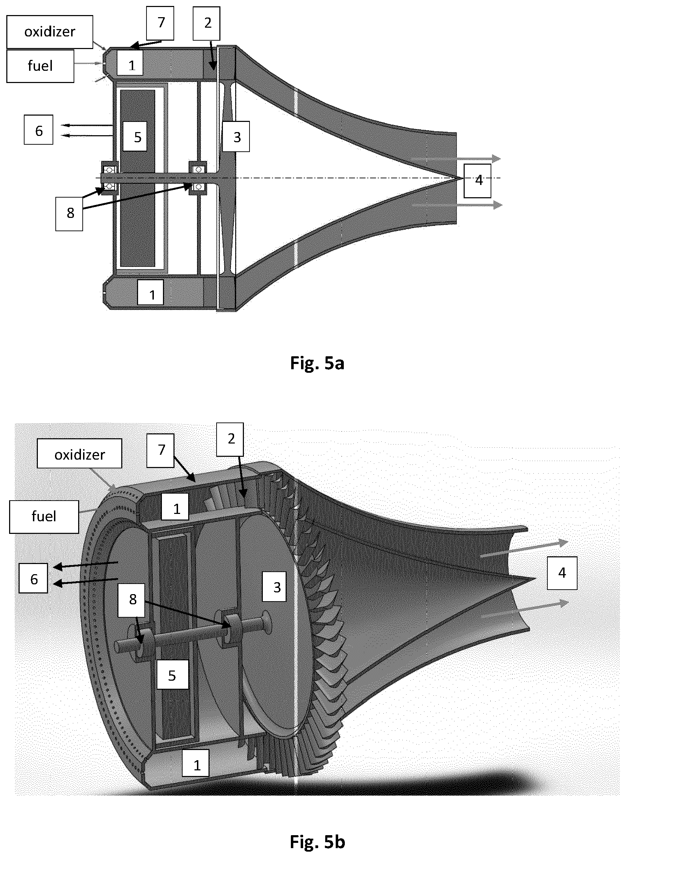

The subject matter of the invention is presented in Figs. 4 and 5, where the structural components of identical functions have the following identical reference numerals: **1-** detonation chamber, **2** - guides, **3** - turbine, **4** - outlet of incomplete combustion products from the turbine (to the main combustion chamber of the rocket engine), **5** - power generator (generator), **6** - electric cables for powering propellant pumps and possibly other on-board systems, **7** - device body, **8** - bearings of the turbine-generator shaft system.

In Fig. 4 and Fig. 5, the pre-combustion chamber of a liquid propellant rocket engine is a detonation chamber **1,** in which a propellant mixture enriched with one of its components is continuously burned - in a rotating detonation mode, the chamber being arranged coaxially with a turbine **3** and a power generator **5** that powers electric motors (not shown) driving the fuel and oxidant pumps (not shown), and also with the outlet **4** of incomplete combustion products from the turbine **3** to the main combustion chamber (not shown) of the rocket engine.

According to the invention (Fig. 4), the pre-combustion chamber **1** has a form of a disk connected on one side to the device body **7** and protruding beyond its external circumference and on the other side forming a coaxial outlet **4** for incomplete combustion products passing through a centripetal turbine **3** mounted on a shaft equipped with the bearings **8** supporting also the power generator **5** built into the body **7.** In a cylindrical outer wall of the pre-combustion chamber **1** according to the invention, there are circumferentially arranged inlets of the fuel and oxidant, preferably previously vaporized, and on its cylindrical inner wall there are guides **2** splitting a centripetal stream of exhaust gases and directing them to the blades of the centripetal turbine **3.**

Alternatively (Fig. 5), the pre-combustion chamber **1** has the form of a ring mounted on an inner side of a device cylindrical body **7** and having a common external wall with the body **7,** whereas a power generator **5** built into an interior of the body **7** and mounted on a shaft equipped with the bearings **8** together with an axial turbine **3** separating the body **7** from the outlet **4** of combustion products. In the annular pre-combustion chamber **1** according to the invention, inlets of the fuel and oxidant, preferably previously vaporized, are arranged concentrically on the cylindrical ring base opposite to the outlet **4** of a stream of exhaust gases, where there are guides splitting the axial stream of exhaust gases and directing the same to the blades of the axial turbine **3.**

Electricity from the power generator **5** is directed through lines **6** to drive the fuel and oxidant pumps and possibly other electrical devices/systems of the rocket.

### Literature:

1. Sutton G. P., Biblarz O., Rocket propulsion elements, A Wiley-Interscience Publication JOHN WILEY & SONS, INC. New York / Chichester / Weinheim / Brisbane / Singapore / Toronto (7th ed. 2000);
2. https://en.wikipedia.org/wiki/Staged_combustion_cycle;
3. Wolański P., "Detonative Propulsion", Proceedings of the Combustion Institute, 34, pp.125-158, Elsevier (2013);
4. Wolański P. (Ed.), "Research on detonative propulsion in Poland", Institute of Aviation Scientific Publication No. 60, Warsaw: tukasiewicz Research Network - Institute of Aviation, 2021. ISBN 978-83-63539-45-0.

## Claims

1. A device for providing energy for driving fuel and oxidizer pumps of a liquid propellant rocket engine having a main combustion chamber, the device comprising a pre-combustion chamber (1), a device cylindrical body (7), a centripetal or an axial turbine (3), a power generator (5) for powering electric motors driving fuel and oxidizer pumps, a coaxial outlet (4) for incomplete combustion products from the turbine (3) to the main combustion chamber of the rocket engine, and a shaft equipped with bearings (8),
wherein the power generator (5) is built into the device body (7),
wherein the turbine (3) is mounted on the shaft equipped with the bearings (8) supporting also the power generator (5),
wherein the pre-combustion chamber (1) provides energy for driving the fuel and oxidant pumps,
wherein the pre-combustion chamber (1) is a rotating detonation chamber in which the propellant mixture enriched with one of its components is continuously burned,
wherein the incomplete combustion products from the pre-combustion chamber (1) are used to power the turbine (3) driving the power generator (5),
wherein the pre-combustion-chamber (1) is connected to the device body (7), and
wherein the pre-combustion chamber (1) is arranged coaxially with
the turbine (3), the nower generator (5) and the outlet (4).

2. The device according to claim 1, **characterized in that** the pre-combustion chamber is a disc-form rotating detonation chamber **(1)** connected on one side to the device cylindrical body (7) and extending beyond its external circumference, wherein the turbine (3) is a centripetal turbine (3).

3. The device according to claim 2, **characterized in that** inlets of the fuel and oxidant, preferably previously vaporized, are circumferentially arranged in the cylindrical outer wall of the pre-combustion disc-form rotating detonation chamber **(1),** and on its cylindrical inner wall there are guides **(2)** splitting a centripetal stream of the incomplete combustion products and directing them to the blades of the centripetal turbine **(3).**

4. The device according to claim 1, **characterized in that** the pre-combustion chamber is a ring-form rotating detonation chamber **(1)** mounted on an inner side of the device cylindrical body **(7)** and having a common external wall with the body **(7),** wherein the turbine (3) is an axial turbine (3), and wherein the turbine (3) separates the body (7) from the outlet (4).

5. The device according to claim 4, **characterized in that** inlets of the fuel and oxidant, preferably previously vaporized, are arranged concentrically on the cylindrical ring base opposite to the outlet **(4)** of a stream of the incomplete combustion products, where there are guides **(2)** splitting the axial stream of the incomplete combustion products and directing them to the blades of the axial turbine **(3).**

6. The device according to any one of the claims 1 to 5, **characterized in that** the power generator **(5)** is connected, in use, via lines **(6)** with electric motors driving the fuel and oxidant pumps and possibly also with other electrical devices/systems.

## Patentansprüche

1. Eine Vorrichtung zur Energieversorgung der Treibstoff- und Oxidatorpumpen eines Flüssigtreibstoff-Raketentriebwerks mit Hauptbrennkammer, wobei die Vorrichtung eine Vorbrennkammer (1), ein zylindrisches Gehäuse (7), eine Zentripetal- oder Axialturbine (3), einen Stromgenerator (5) zum Antrieb der Elektromotoren der Treibstoff- und Oxidatorpumpen, einen koaxialen Auslass (4) für die Produkte unvollständiger Verbrennung von der Turbine (3) zur Hauptbrennkammer des Raketentriebwerks und eine mit Lagern (8) versehene Welle umfasst,
in der der Stromgenerator (5) im Gehäuse (7) der Vorrichtung untergebracht ist,
in der die Turbine (3) auf einer mit Lagern (8) versehenen Welle montiert ist, die den Stromgenerator (5) trägt,
in der die Vorbrennkammer (1) die Energie für den Antrieb der Treibstoff- und Oxidatorpumpen liefert,
wobei die Vorbrennkammer (1) eine Detonationskammer ist, in der das mit einer seiner Komponenten angereicherte Treibstoffgemisch kontinuierlich in einer rotierenden Detonationsprozess verbrennt wird,
bei den unvollständigen Verbrennungsprodukten aus der Vorbrennkammer (1) zum Antrieb einer Turbine (3) genutzt werden, die wiederum den Stromgenerator (5) antreibt,
wobei die Vorbrennkammer (1) mit dem Gehäuse (7) dieser Vorrichtung verbunden ist und
wobei die Vorbrennkammer (1) koaxial zur Turbine (3), dem Stromgenerator (5) und dem Auslass (4) angeordnet ist.

2. Die Vorrichtung nach Anspruch 1, **dadurch gekennzeichnet, dass** die Vorbrennkammer eine scheibenförmige Detonationskammer (1) ist, die im Rotationsdetonationsmodus arbeitet, und die einseitig mit dem zylindrischen Gehäuse (7) der Vorrichtung verbunden ist und über dessen Außenumfang hinausragt, und dass die Turbine (3) eine Kreiselturbine (3) ist.

3. Die Vorrichtung nach Anspruch 2, **dadurch gekennzeichnet, dass** die Brennstoff- und Oxidatoreinlässe, vorzugsweise zuvor in den gasförmigen Zustand überführt, in der zylindrischen Außenwand der rotierenden Detonationsvorkammer (1) scheibenförmig umlaufend angeordnet sind und sich an ihrer zylindrischen Innenwand Leitschaufeln (2) befinden, die den einströmenden Strom unvollständiger Verbrennungsprodukte abtrennen und zu den Zentripetalturbinenschaufeln (3) leiten.

4. Die Vorrichtung nach Anspruch 1, **dadurch gekennzeichnet, dass** die Vorkammer eine ringförmige Detonationskammer (1) ist, die im Rotationsdetonationsmodus arbeitet und die an der Innenseite des zylindrischen Gehäuses (7) der Vorrichtung angebracht ist und mit diesem eine gemeinsame Außenwand aufweist, wobei die Turbine (3) eine Axialturbine (3) ist und diese Turbine (3) das Gehäuse (7) vom Auslass (4) trennt.

5. Die Vorrichtung nach Anspruch 4, **dadurch gekennzeichnet, dass** die Brennstoff- und Oxidator-Einlässe, vorzugsweise zuvor in den gasförmigen Zustand überführt, konzentrisch auf der Basis des zylindrischen Rings gegenüber dem Auslass (4) des unvollständigen Verbrennungsproduktstroms angeordnet sind, wobei die Leitschaufeln (2) den axialen Strom der unvollständigen Verbrennungsprodukte trennen und zu den axialen Turbinenschaufeln (3) lenken.

6. Die Vorrichtung nach einem der Ansprüche 1 bis 5, **dadurch gekennzeichnet, dass** der Stromgenerator (5) im Betrieb über Leitungen (6) mit Elektromotoren zum Antrieb der Brennstoff- und Oxidatorpumpen und gegebenenfalls mit anderen elektrischen Geräten/Systemen verbunden ist.

## Revendications

1. Dispositif d'alimentation en énergie des pompes à carburant et à comburant d'un moteur-fusée à propergol liquide ayant une chambre de combustion principale, ledit dispositif comprenant une chambre de précombustion (1), un carter cylindrique (7), une turbine centripète ou axiale (3), un générateur de puissance (5) entraînant les moteurs électriques des pompes à carburant et à comburant, une sortie coaxiale (4) pour l'évacuation des produits de combustion incomplète de la turbine (3) vers la chambre de combustion principale du moteur-fusée, et un arbre muni de paliers (8),
dans lequel le générateur de puissance (5) est logé dans le carter (7) dudit dispositif, dans lequel la turbine (3) est montée sur un arbre muni de paliers (8) supportant le générateur de puissance (5),
dans lequel la chambre de précombustion (1) fournit l'énergie nécessaire à l'entraînement des pompes à carburant et à comburant,
dans lequel cette chambre de précombustion (1) est une chambre de détonation dans laquelle le mélange de propergol, enrichi en l'un de ses composants, subit une combustion continue par détonation rotative,
dans lequel les produits de combustion incomplète provenant de la chambre de précombustion (1) sont utilisés pour entraîner une turbine (3) qui actionne un générateur de puissance (5),
dans lequel la chambre de précombustion (1) étant reliée au carter (7) du dispositif et
dans lequel la chambre de précombustion (1) étant disposée coaxialement avec la turbine (3), le générateur de puissance (5) et la sortie (4).

2. Dispositif selon la revendication 1, **caractérisé en ce que** la chambre de précombustion est une chambre de détonation (1) en forme de disque fonctionnant en mode de détonation rotative, reliée d'un côté au carter cylindrique (7) du dispositif et s'étendant au-delà de sa circonférence extérieure, et **en ce que** la turbine (3) est une turbine centripète (3).

3. Dispositif selon la revendication 2, **caractérisé en ce que** les entrées de carburant et d'oxydant, de préférence préalablement vaporisées, sont disposées circonférentiellement sur la paroi extérieure cylindrique de la chambre de précombustion (1) à détonation rotative, sous forme de disque, et que sa paroi intérieure cylindrique comporte des aubes directrices (2) séparant le flux entrant de produits de combustion incomplète et les dirigeant vers les pales de la turbine centripète (3).

4. Dispositif selon la revendication 1, **caractérisé en ce que** la chambre de précombustion est une chambre de détonation (1) annulaire fonctionnant en mode de détonation rotative, montée sur la face intérieure du carter cylindrique (7) du dispositif et présentant une paroi extérieure commune avec du carter cylindrique (7), la turbine (3) étant une turbine axiale (3) séparant le carter (7) de la sortie (4).

5. Dispositif selon la revendication 4, **caractérisé en ce que** les entrées de carburant et d'oxydant, de préférence préalablement vaporisées, sont disposées concentriquement sur la base de l'anneau cylindrique opposé à la sortie (4) du flux de produits de combustion incomplète, où se trouve les aubes directrices (2) séparant le flux axial de produits de combustion incomplète et le dirigeant vers les pales axiales de la turbine (3).

6. Dispositif selon l'une quelconque des revendications 1 à 5, **caractérisé en ce que** le générateur (5) est relié, en fonctionnement, par des câbles (6) à des moteurs électriques entraînant les pompes à carburant et à oxydant, et éventuellement à d'autres dispositifs ou systèmes électriques.
